(19) Europäisches Patentamt
European Patent Office
Office européen des brevets

(11) **EP 3 577 422 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(21) Anmeldenummer: **18708330.8**

(22) Anmeldetag: **23.01.2018**

(51) Int Cl.:
***G01D 5/244*** *(2006.01)*

(86) Internationale Anmeldenummer:
**PCT/EP2018/025017**

(87) Internationale Veröffentlichungsnummer:
**WO 2018/141482 (09.08.2018 Gazette 2018/32)**

(54) **VERFAHREN UND VORRICHTUNG ZUM ÜBERWACHEN DER SPURSIGNALE EINES POSITIONSÄNDERUNGSSENSORS**

METHOD AND DEVICE FOR MONITORING THE TRACK SIGNALS OF A POSITION CHANGE SENSOR

PROCÉDÉ ET DISPOSITIF POUR SURVEILLER LES SIGNAUX DE VOIE D'UN CAPTEUR DE CHANGEMENT DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2017 DE 102017000931**

(43) Veröffentlichungstag der Anmeldung:
**11.12.2019 Patentblatt 2019/50**

(73) Patentinhaber: **SEW-EURODRIVE GmbH & Co. KG
76646 Bruchsal (DE)**

(72) Erfinder:
• **MÜLLER, Michael
76689 Karlsdorf-Neuthard (DE)**
• **ZERFASS, Florian
71665 Vaihingen an der Enz (DE)**
• **NORENBURG, Benjamin
76689 Karlsdorf-Neuthard (DE)**
• **SENFT, Christian
76228 Karlsruhe-Grünwettersbach (DE)**
• **RICHTER, Sebastian
69120 Heidelberg (DE)**

(56) Entgegenhaltungen:
| | |
|---|---|
| **EP-A1- 1 302 753** | **EP-A2- 0 432 401** |
| **WO-A1-03/007099** | **WO-A1-2006/092026** |
| **DE-A1- 10 036 090** | **DE-A1- 10 208 915** |
| **DE-A1-102007 033 009** | **DE-A1-102011 083 042** |

**Beschreibung**

Die Erfindung betrifft ein Verfahren und eine Vorrichtung zum Überwachen der Spursignale eines Positionsänderungssensors.

**Aus der** DE 10 2007 033 009 A1 **sind Positionsänderungssensoren, wie Winkellagengeber bekannt.**

**Aus der** DE3631429A1 **ist ein Längen- oder Winkelmesssystem mit einer Fehlererkennungseinrichtung bekannt.**

**Aus der** DE102011083042A1 **ist eine Überwachungseinheit und Verfahren zur Überwachung von Positionssignalen inkrementaler Positionsmesseinrichtungen bekannt.**

**Aus der** WO2006092026A1 **ist eine Signalverarbeitung bekannt.**

**Aus der** EP1302753A1 **ist ein Positionsgeber-Überwachungsverfahren bekannt.**

**Aus der** DE102010051873A1 **ist eine Integrierte Schaltungsanordnung und Verfahren zur Signalüberwachung bekannt.**

**Aus der** WO 03/007099 A1 **ist als nächstliegender Stand der Technik eine Überwachung eines Messsignals bekannt.**

**Aus der** DE 10 2011 083042 A1 **ist eine Überwachungseinheit für Positionssignale eines Inkrementalgebers bekannt.**

**Aus der** DE 10 2007 033 009 A1 **ist ein Verfahren zur Übertragung von Signalen von einer Positionsmesseinrichtung zu einer Auswerteeinheit bekannt.**

**Aus der** EP 1 302 753 A1 **ist ein Positionsgeber-Überwachungsverfahren bekannt.**

**Aus der** WO 2006 092 026 A1 **ist eine Positionsbestimmungsvorrichtung bekannt.**

**Aus der** EP 0 432 401 A2 **ist eine Spinnereimaschine mit bei Auftreten von Fehlern Fehlersignale abgebender Signalgeber bekannt.**

**Aus der** DE 100 36 090 A1 **ist ein Verfahren zur Unterdrückung systematischer Fehler von inkrementellen Lagegebern bekannt.**

**Aus der** DE 102 08 915 A1 **ist ein Verfahren zur Interpolation mindestens zweier positionsabhängiger periodischer zueinander phasenverschobener Analogsignale bekannt.**

Daher liegt der Erfindung die Aufgabe zugrunde, eine ressourcenintensiven Fehlerdiagnose für die Realisierung einer vollständigen Aufdeckung von Spursignalfehlern bei Positionsänderungssensoren weiterzubilden.

Erfindungsgemäß wird die Aufgabe bei dem Verfahren nach den in Anspruch 8 und bei der Vorrichtung nach den in Anspruch 1 gelöst.

Die Aufgabe eines erfindungsgemäßen Positionsänderungssensors besteht dabei darin, Lage- oder Winkeländerungen eines beweglichen Anlagenteils zu erfassen und diese Information in elektrische Signale zu überführen, sodass ein Steuerungs- und/oder Regelungssystem an Hand dieser Signale zielgerichtet weitere mittelbar oder unmittelbar an diesen Anlagenteil angeschlossene Aktoren, insbesondere eine Antriebseinheit bestehend aus einem Elektromotor und einer Bremse, ansteuern kann.

Diese elektrischen Signale des Positionsänderungssensors werden typischerweise durch ein optisches oder magnetisches Verfahren erzeugt, indem zwei Sensoren so angeordnet sind, dass ein Maßstab, bestehend aus sich abwechselnden Hell/Dunkel-Stellen bzw. aus sich ändernden magnetischen Flussdichten, stets so abgetastet wird, dass der eine Sensor immer ein Extrema misst, während der andere Sensor zur selben Zeit den Nulldurchgang detektiert. Dadurch ergeben sich zwei kontinuierliche sinusförmige Signale, die analogen Spursignale A und B, die zueinander um 90° phasenverschoben sind.

Ist das Spursignal A gegenüber dem Spursignal B zeitlich voreilend, so findet eine Bewegung in die eine Richtung statt. Ist das Spursignal A gegenüber dem Spursignal B zeitlich nacheilend, findet eine Bewegung in die entgegengesetzte Richtung statt. Somit lässt sich anhand beider Spursignale A und B eine Richtungsinformation ableiten. Ist bei drehbewegten Positionsänderungssensoren die Strichanzahl je Umdrehung bzw. bei Längenmessgeräten der Abstand zwischen zwei Strichen, also der Maßstab, bekannt, lässt sich zusätzlich die Lageänderung, die Geschwindigkeit und die Beschleunigung berechnen. Bei Kenntnis einer bestimmten Referenzposition, die beispielsweise durch eine Referenzfahrt des Systems ermittelt wird, können relativ zu dieser Referenzposition die Lageänderung und somit auch die genaue aktuelle Position bestimmt werden.

Für einfache Positionsmessanwendungen werden die sinusförmigen Spursignale A und B typischerweise mit Schmitt-Trigger in digitale Rechteck-Signale umgewandelt. Die Digitalisierung findet dabei entweder direkt im Positionsänderungssensor oder im Steuerungs- und/oder Regelungssystem statt. Findet die Digitalisierung im Positionsänderungssensor statt, werden die digitalen Rechteck-Signale mit TTL- oder HTL-Pegel zum Steuerungs- und/oder Regelungssystem gesendet. Im Falle einer Digitalisierung im Steuerungs- und/oder Regelungssystem erfolgt die Übertragung vom Positionsänderungssensor mittels der sinusförmigen Spursignale A und B. Aus dem zeitlichen Verlauf dieser digitalen Rechteck-Signale lässt sich - mit einer gewissen Ungenauigkeit bedingt durch die Digitalisierung - die Lage- oder Winkeländerung eines beweglichen Anlagenteils berechnen. Für gängige Anwendungen sind die digitalisierten Spursignale ausreichend, um beispielsweise eine Drehbewegung zu ermitteln. Zum Detektieren sehr langsamer Bewegungen ist dieses Verfahren jedoch zu ungenau und nur über eine Schätzung der Bewegungsänderung und entsprechender Interpolation möglich.

Für Positionsmessanwendungen, die eine höhere Genauigkeit erfordern, erfolgt die Übertragung zum Steuerungs- und/oder Regelungssystem immer mittels der analogen Spursignale A und B. Meist erfolgt im Steuerungs- und/oder Regelungssystem zusätzlich zur Digitalisierung auch eine Abtastung der analogen Spursignale mittels Analog/Digital-Wandler mit hoher Auflösung, typischerweise mit mindestens 10 Bit, um den Quantisierungsfehler klein zu halten. Dabei werden die digital erfassten Analogsignalpegel dazu verwendet, die genaue Position innerhalb einer Periode der sinusförmigen Spursignale zu ermitteln. Durch eine Kombination aus analoger und digitaler Spursignalauswertung lassen sich so Strecken- bzw. Winkeländerungen sehr genau erfassen. Alternativ kann die Spursignalauswertung auch direkt in den Positionsänderungssensor integriert sein. In diesem Fall werden die erfassten Strecken- bzw. Winkeländerungen mittels eines digitalen Datenprotokolls, typischerweise über einen industriellen Feldbus wie beispielsweise Profibus, an das Steuerungs- und/oder Regelungssystem übertragen.

Die erfassten Strecken- bzw. Winkeländerungen werden beispielsweise dazu verwendet, um Bearbeitungsköpfe von Werkzeugmaschinen, Industrieroboter und/oder mobile Assistenzsysteme zu bewegen. Ein defekter Positionsänderungssensor führt dabei durch eine daraus resultierende, falsche Regelung meist zu einer Zerstörung des Werkstücks und/oder der Maschine. Im schlimmsten Fall kann sogar der Bediener der Maschine verletzt oder gar getötet werden. Dabei können sich auftretende Fehler vielfältig auswirken. So führt ein elektrischer Defekt wie etwa eine Ablösung der Maßverkörperung oder ein Kurzschluss auf der Anschlussleitung zu einer Störung der analogen Spursignale. Ein Verlust der mechanischen Kopplung zwischen Motor und Positionsänderungssensor resultiert in Ausgangssignale, die nicht der realen Bewegung entsprechen, im ungünstigsten Fall sogar einen Stillstand anzeigen, obwohl noch eine Bewegung stattfindet.

Im Folgenden werden nur die Fehlerfälle genauer betrachtet, die eine Auswirkung auf die analogen Spursignale haben, da diese durch eine geeignete Auswerteschaltung im Steuerungs- und/oder Regelungssystem erkannt werden können. Weitere Fehlerfälle müssen durch Fehlerausschluss, beispielsweise durch mechanische Überdimensionierung und Formschluss, oder durch übergeordnete Maßnahmen, meist durch das Regelverfahren, beherrscht werden. Für die Auswertung der analogen Spursignale wird dabei die Eigenschaft verwendet, dass die sinusförmigen Spursignale mit 90° Phasenversatz einen Kreis beschreiben. Der Radius R dieses Kreises muss stets innerhalb eines gültigen Wertebereiches liegen und kann aus jeweils zwei gleichzeitig aufgenommenen Signalpegelwerten ($U_A$, $U_B$) der Spursignale über den trigonometrischen Pythagoras

$$U_A^2 + U_B^2 = (\hat{U}_A * \sin(2\pi * f * t))^2 + (\hat{U}_B * \cos(2\pi * f * t))^2 = R^2$$

mit einer Spursignalfrequenz f zum Zeitpunkt t berechnet werden. Liegt dabei der ermittelte Radius R außerhalb der zulässigen Toleranz, meldet die erfindungsgemäße weitere Auswerteeinheit einen Fehler. Damit keine fehlerhaften Signale für einen großen Teil der Signalperiode innerhalb des zulässigen Toleranzbereichs liegen, wird eine Signalperiode mindestens 5-fach abgetastet. Somit ist jeder Fehler im Positionsänderungssensor und auf den Spursignalen detektierbar. Somit sind großer Ressourcenbedarf des auswertenden Mikrocontrollers und damit zu hohen Materialkosten der Auswerteschaltung vermieden.

**Wichtige Merkmale der Erfindung bei dem Verfahren zum Überwachen der Spursignale eines Positionsänderungssensors, insbesondere mittels einer Gebersignal-Diagnosevorrichtung, sind, dass die Spursignale des Positionsänderungssensors zyklisch mit einer zeitlichen Folge, insbesondere Abfolge, von Abtastzeitpunkten abgetastet und die so bestimmten Abtastwerte ausgewertet werden,**

**wobei die Folge aus Zeitabschnitten zusammengesetzt ist,**

**wobei jeder Zeitabschnitt jeweils mehr als vier zeitlich regelmäßig voneinander beabstandete Abtastzeitpunkte aufweist und dabei jedem Zeitabschnitt eine jeweilige zeitliche Beabstandung ($T_1$, $T_2$, $T_3$, $T_4$, $T_5$) zugeordnet ist, insbesondere wobei jedem der Zeitabschnitte eine jeweilige Beabstandung eineindeutig zugeordnet ist.**

**Der Vorteil dabei ist, dass ein weiter Frequenzbereich mit möglichst wenig Abtastungen mit möglichst hoher Auflösung auswertbar ist.**

**Bei einer weiteren vorteilhaften Ausgestaltung ist die einem der Zeitabschnitte zugeordnete zeitliche Beabstandung kleiner als die einem anderen, innerhalb der Folge später angeordneten, Zeitabschnitte zugeordnete zeitliche Beabstandung,**

**insbesondere die einem vorausgehenden Zeitabschnitt der Folge direkt nachfolgenden Zeitabschnitt**

der Folge zugeordnete zeitliche Beabstandung doppelt so groß ist wie die dem vorausgehenden Zeitabschnitt zugeordnete zeitliche Beabstandung. Der Vorteil dabei ist, dass die Grundmuster einander überlagert angeordnet sind und somit zeitsparend jeweilige Frequenzen mit hoher Auflösung erfassbar sind.

Bei einer weiteren vorteilhaften Ausgestaltung entspricht die einem, insbesondere dem ersten, Zeitabschnitt der Folge zugeordnete Beabstandung einem Fünftel der Periodenlänge der maximal zulässigen Frequenz der Ausgangssignale des Positionsänderungssensors, insbesondere der Signalfrequenz $f_{MAX}$, oder weniger und/oder entspricht die einem, insbesondere dem letzten, Zeitabschnitt der Folge zugeordnete Beabstandung einem Fünftel der Periodenlänge einer Grenz-Signalfrequenz $f_G$ oder weniger. Der Vorteil dabei ist, dass der gesamte Frequenzbereich lückenfrei oder zumindest lückenarm auswertbar ist.

Bei einer weiteren vorteilhaften Ausgestaltung werden die Spursignale auch auf Basis digitaler Signalparameter, beispielsweise auf Basis fallender und/oder steigender Schaltflanken, ausgewertet und das Ergebnis dieser Auswertung wird mit dem Auswerten der Abtastwerte verknüpft,

insbesondere so, dass die Spursignale bis zu einer maximalen Signalfrequenz ($f_{MAX}$) vollständig auf Fehler diagnostiziert werden. Der Vorteil dabei ist, dass Fehler verbessert diagnostizierbar sind.

Bei einer weiteren vorteilhaften Ausgestaltung wird die Folge vorab, insbesondere bei Herstellung oder Inbetriebnahme, erzeugt und in einer Lookup-Table-Einheit abgelegt. Der Vorteil dabei ist, dass ein besonders einfaches Verfahren durchführbar ist und nur geringe Rechenzeit erforderlich ist.

Wichtige Merkmale bei der Vorrichtung, insbesondere zur Durchführung eines vorgenannten Verfahrens, insbesondere zur Fehlerdiagnose von Spursignalen eines Positionsänderungssensors (6), insbesondere eines Inkrementalgebers, sind, dass die Vorrichtung aufweist:

- Eine erste Auswerteeinheit,

- eine weitere Auswerteeinheit,

- und eine Verknüpfungseinheit,

wobei die erste Auswerteeinheit die Spursignale auf Basis digitaler Signalparameter, beispielsweise auf Basis fallender und/oder steigender Schaltflanken, auswertet,

wobei aus den digitalen Signalparametern mindestens eine Statusinformation, insbesondere eine Geschwindigkeitsinformation und/oder eine Positionsinformation und/oder eine Bewegungsrichtungsinformation und/oder eine Beschleunigungsinformation und/oder eine Ruckinformation, berechnet und an einem ersten Ausgang der ersten Auswerteeinheit bereitgestellt wird,

wobei bei Erkennen eines Fehlerzustands der digitalen Signalparameter ein Fehlersignal an einem weiteren Ausgang der ersten Auswerteeinheit erzeugt wird,

wobei die weitere Auswerteeinheit die Spursignale auf Basis analoger Signalparameter, typischerweise auf Basis von Spannungspegel und/oder Strompegel, auswertet,

wobei bei Verlassen eines Gültigkeitsbereichs der analogen Signalparameter ein Fehlersignal am Ausgang der weiteren Auswerteeinheit erzeugt wird,

wobei die Verknüpfungseinheit in Abhängigkeit von der berechneten Statusinformation, dem Zustand des Fehlersignals der ersten Auswerteeinheit und dem Zustand des Fehlersignals der weiteren Auswerteeinheit durch logische Verknüpfung ein resultierendes Fehlersignal am Ausgang der Verknüpfungseinheit generiert,

wobei mindestens das resultierende Fehlersignal der Verknüpfungseinheit an einen ersten Ausgang der Gebersignal-Diagnosevorrichtung weitergeleitet wird

und wobei das resultierende Fehlersignal angibt, ob die Spursignale des Positionsänderungssensors fehlerhaft sind.

Der Vorteil hierbei ist, dass eine geeignete Kombination sowohl digitaler als auch analoger Signalparameter zu einer optimierten Fehlerdiagnose führt.

Erfindungsgemäß wird somit das Problem einer ressourcenintensiven Fehlerdiagnose für die Realisierung einer vollständigen Aufdeckung von Spursignalfehlern bei Positionsänderungssensoren dadurch gelöst, dass die Diagnoseauswertung angepasst an eine maximal auftretende Spursignalfrequenz sowohl mittels digitaler Signalparameter als auch mittels analoger Signalparameter durchgeführt wird, wobei durch geeignete Kombination beider Signalparameterarten die Anzahl der benötigten Messzeitpunkte derart reduzierbar ist, dass damit Kosten, insbesondere Bauteil- und/oder Herstellungskosten, einsparbar sind.

Bei einer weiteren vorteilhaften Ausgestaltung wird die Statusinformation der ersten Auswerteeinheit an einen weiteren Ausgang der Gebersignal-Diagnosevorrichtung weitergeleitet.

Der Vorteil hiervon ist, dass diese Statusinformationen auch für weitere Steuerungs- und/oder Regelungsaufgaben verwendbar sind und dabei nur einmal berechnet werden müssen.

Bei einer weiteren vorteilhaften Ausgestaltung besteht die erste Auswerteeinheit aus

- einer Schmitt-Trigger-Einheit,

- einem Quadraturdecoder,

- einem Flankenzähler,

- einer Statusinformationsberechnungseinheit,

- und einer Vergleichseinheit besteht,

wobei die Schmitt-Trigger-Einheit die Spursignale des Positionsänderungssensors in Rechteck-Signale umwandelt,

wobei der Quadraturdecoder aus den Rechteck-Signalen einen richtungsabhängigen Flankenzählwert generiert,

wobei der Flankenzähler aus den Rechteck-Signalen einen richtungsunabhängigen Flankenzählwert generiert,

wobei die Statusinformationsberechnungseinheit aus dem richtungsabhängigen Flankenzählwert eine Statusinformation berechnet und an einem ersten Ausgang der ersten Auswerteeinheit zur Verfügung stellt,

und wobei die Vergleichseinheit den richtungsabhängigen Flankenzählwert und den richtungsunabhängigen Flankenzählwert auf Gleichheit überprüft und bei Ungleichheit ein Fehlersignal an einem weiteren Ausgang der ersten Auswerteeinheit setzt. Der Vorteil hiervon ist, dass zwei etablierte und einfach zu realisierende Standardverfahren zur Diagnose heranziehbar sind.

Bei einer weiteren vorteilhaften Ausgestaltung besteht die weitere Auswerteeinheit (3) aus

- einer Zeitgeber-Einheit,

- einer Lookup-Table-Einheit,

- einer Analog/Digital-Wandler-Einheit,

- und einer Trigonometrischen Einheit besteht,

wobei die Zeitgeber-Einheit zyklisch in variablen Abständen abhängig von den Daten aus einer Lookup-Table-Einheit Synchronisationssignale generiert,

wobei die Analog/Digital-Wandler-Einheit abhängig von diesem Synchronisationssignal die aktuellen Analogpegel der Spursignale des Positionsänderungssensors in äquivalente digitale Wertepaare ($U_A$, $U_B$) umwandelt,

und wobei die Trigonometrische Einheit die digitalen Wertepaaren ($U_A$, $U_B$) der Spursignale über die Beziehung:

$$U_A^2 + U_B^2 = (\widehat{U}_A * \sin(2\pi * f * t))^2 + (\widehat{U}_B * \cos(2\pi * f * t))^2 = R^2$$

auf Gültigkeit prüft und bei Verlassen eines definierten Toleranzwertebereichs ein Fehlersignal am Ausgang der weiteren Auswerteeinheit setzt. Der Vorteil hierbei ist, dass die Signalauswertung über eine Änderung der Werte in der Lookup-Table-Einheit schnell an die jeweilige Anwendung anpassbar ist.

Bei einer weiteren vorteilhaften Ausgestaltung besteht die Verknüpfungseinheit (4) aus

einem Schaltelement und einer Logikeinheit besteht,

wobei das Schaltelement abhängig von der Statusinformation der ersten Auswerteeinheit das Fehlersignal der ersten Auswerteeinheit an seinem Ausgang weiterleitet bzw. nicht weiterleitet,

und wobei die Logikeinheit ein Fehlersignal am Ausgang der Verknüpfungseinheit setzt, sobald das durch das Schaltelement weitergeleitete Fehlersignal der ersten Auswerteeinheit und/oder das Fehlersignal der weiteren Auswerteeinheit anliegt. Der Vorteil hierbei ist, dass die Ergebnisse verschiedener Auswerteeinheiten kombinierbar sind.

Wichtige Merkmale bei dem System bestehend aus Umrichter, Positionsänderungssensor und Gebersignal-Diagnosevorrichtung ist, dass die Gebersignal-Diagnosevorrichtung in einem Umrichter integriert ist,

wobei die Gebersignal-Diagnosevorrichtung eingangsseitig mit einem Positionsänderungssensor mit analoger Ausgangsstufe verbindbar ist,

und wobei die Gebersignal-Diagnosevorrichtung ausgangsseitig mit dem Regelungsteil der Signalelektronik des Umrichters verbindbar ist.

Der Vorteil hierbei ist, dass ein Positionsänderungssensor einfach realisierbar ist, da die komplexere Elektronik für die Fehlerdiagnose im Umrichter integriert ist.

Wichtige Merkmale bei dem System bestehend aus Umrichter, Positionsänderungssensor und Gebersignal-Diagnosevorrichtung ist, dass die Gebersignal-Diagnosevorrichtung direkt in einem Positionsänderungssensor integriert ausgeführt ist,

wobei die Gebersignal-Diagnosevorrichtung eingangsseitig mit der analogen Ausgangsstufe des Positionsänderungssensors verbindbar ist, in der die analogen Spursignale erzeugt bzw. konditioniert werden,

wobei die Gebersignal-Diagnosevorrichtung ausgangsseitig mit einem Umsetzer auf eine serielle Kommunikationsschnittstelle verbindbar ist,

wobei der Positionsänderungssensor über eine serielle Kommunikationsschnittstelle mit einem Umrichter verbindbar ist,

und wobei über diese serielle Kommunikationsschnittstelle mindestens die Spursignale und/oder die Statusinformation des Ausgangs der ersten Auswerteeinheit und das resultierende Fehlersignal des Ausgangs der Verknüpfungseinheit mittels eines weiteren Umsetzers an den Regelungsteil der Signalelektronik des Umrichters übertragbar sind.

Der Vorteil hierbei ist, dass eine Digitalisierung der Status- und Fehlerinformation bereits im Positionsänderungssensor realisierbar und damit eine störsichere Übertragung der Daten zum Umrichter möglich ist.

Wichtige Merkmale bei dem System bestehend aus Umrichter, Positionsänderungssensor und Gebersignal-Diagnosevorrichtung ist, dass die Spursignale eines Positionsänderungssensors bis zu einer maximalen Signalfrequenz $f_{MAX}$ vollständig auf Fehler diagnostizierbar sind,

wobei die erste Auswerteeinheit Spursignale im gesamten Frequenzbereich bis zu einer maximalen Signalfrequenz $f_{MAX}$ auswertet,

wobei die weitere Auswerteeinheit Spursignale kleiner gleich der Grenz-Signalfrequenz $f_G$ so auswertet, dass innerhalb eines Messzyklus $T_{CYCLE}$ jede Signalperiode N-fach, insbesondere 5-fach, abgetastet wird und Spursignale zwischen der Grenz-Signalfrequenz $f_G$ und der maximalen Signalfrequenz $f_{MAX}$ so auswertet, dass innerhalb eines Messzyklus $T_{CYCLE}$ eine Signalperiode mindestens N-fach, insbesondere mindestens 5-fach, abgetastet wird,

wobei die Verknüpfungseinheit für Spursignale kleiner gleich der Grenz-Signalfrequenz $f_G$ nur das Fehlersignal der zweiten Auswerteeinheit an ihren Ausgang weiterleitet,

und wobei die Verknüpfungseinheit für Spursignale größer als die Grenz-Signalfrequenz $f_G$ das Fehlersignal am Ausgang setzt, wenn entweder das Fehlersignal der ersten Auswerteeinheit oder das Fehlersignal der zweiten Auswerteeinheit gesetzt ist.

Der Vorteil hierbei ist, dass die Ergebnisse der beiden Auswerteeinheiten in Abhängigkeit der Statusinformation optimal kombiniert werden.

Wichtige Merkmale bei dem System bestehend aus Umrichter, Positionsänderungssensor und Gebersignal-Diagnosevorrichtung ist, dass die notwendigen Messzeitpunkte vorab generiert und in einer Lookup-Table-Einheit abgelegt sind,

wobei das erste Messintervall so gewählt wird, dass eine Periode der Grenz-Signalfrequenz $f_G$ N-fach, insbesondere mindestens 5-fach, abgetastet wird,

wobei mit dem ersten Messintervall die Spursignale des Positionsänderungssensors kontinuierlich über den Messzyklus $T_{CYCLE}$ abgetastet werden,

wobei ein weiteres Messintervall $T_n$ die halbe Dauer des vorherigen Messintervalls $T_{n-1}$ beträgt,

wobei ein weiteres Messintervall $T_n$ solange generiert wird bis die maximale Signalfrequenz $f_{MAX}$ N-fach, insbesondere mindestens 5-fach, abgetastet wird,

wobei mit jedem weiteren Messintervall $T_N$ die Spursignale nur am Anfang jedes Messzyklus $T_{CYCLE}$ für M, insbesondere 9, Messzeitpunkte abgetastet werden,

und wobei gleichzeitige Messzeitpunkte von unterschiedlichen Messintervallen zu einem Messzeitpunkt zusammengefasst werden.

Der Vorteil hierbei ist, dass die Anzahl notwendiger Messzeitpunkte reduzierbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

In der Figur 1 ist eine erfindungsgemäße Gebersignal-Diagnosevorrichtung (1) dargestellt.

In der Figur 2 ist eine beispielhafte Implementierung der erfindungsgemäßen Gebersignal-Diagnosevorrichtung (1) mit einer ersten Auswerteeinheit (2), einer weiteren Auswerteeinheit (3) und einer Verknüpfungseinheit (4) abgebildet.

In der Figur 3 ist die erfindungsgemäße Erzeugung der Messzeitpunkte für die weitere Auswerteeinheit (3) beschrieben.

In der Figur 4 ist ein Anwendungsbeispiel einer erfindungsgemäßen Gebersignal-Diagnosevorrichtung (1) gezeigt, in dem die Gebersignal-Diagnosevorrichtung (1) in einem Umrichter (5) eines elektrischen Leistungsantriebsystems integriert ausgeführt ist.

In der Figur 5 ist ein weiteres Anwendungsbeispiel einer erfindungsgemäßen Gebersignal-Diagnosevorrichtung (1) skizziert, in dem die Gebersignal-Diagnosevorrichtung (1) in einem Positionsänderungssensor (6) integriert ausgeführt ist.

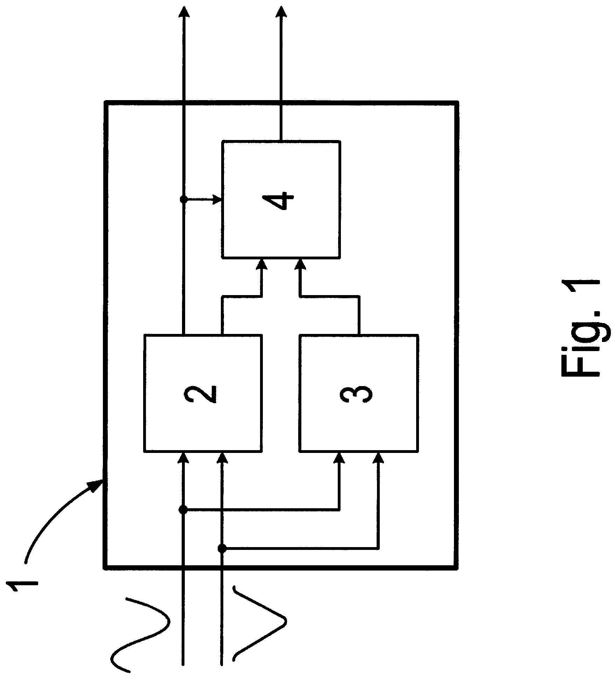

Wie in Figur 1 gezeigt besteht das Eingangssignal der erfindungsgemäßen Gebersignal-Diagnosevorrichtung (1) typischerweise aus zwei Signalspuren. Dabei bestehen die beiden Signalspuren aus einer ersten Signalspur A und einer zweiten Signalspur B, wobei die zweite Signalspur B zur ersten Signalspur A um 90° phasenverschoben ist. Beide Spursignale bilden die Eingangssignale sowohl für die erste Auswerteeinheit (2) als auch für die weitere Auswerteeinheit (3). Aus diesen Spursignalen berechnet die erste Auswerteeinheit (2) auf Basis digitaler Signalparameter mindestens eine Statusinformation, typischerweise eine Geschwindigkeitsinformation und/oder eine Positionsinformation und/oder eine Bewegungsrichtungsinformation und/oder eine Beschleunigungsinformation und/oder eine Ruckinformation, und stellt diese Statusinformation an einem ersten Ausgang der ersten Auswerteeinheit (2) bereit. Zusätzlich überwacht die erste Auswerteeinheit (2) die digitalen Signalparameter auf Plausibilität und setzt bei Erkennen eines Fehlers ein Fehlersignal an einem weiteren Ausgang der ersten Auswerteeinheit (2). Eine weitere Auswerteeinheit (3) wertet die Spursignale des Positionsänderungssensors (6) auf Basis analoger Signalparameter aus und erzeugt bei Erkennen eines Fehlers, beispielsweise durch Verlassen eines Gültigkeitsbereichs der Spursignalpegel, ein Fehlersignal am Ausgang der weiteren Auswerteeinheit (3). Die Fehlersignale sowohl am Ausgang der ersten Auswerteeinheit (2) als auch am Ausgang der weiteren Auswerteeinheit (3) sind dynamisch und liegen nur für die Zeitdauer eines aufgetretenen und detektierten Fehlers dort an. Die Verknüpfungseinheit (4) entscheidet anhand der in der ersten Auswerteeinheit (2) generierten Statusinformation, wie die Fehlersignale der ersten Auswerteeinheit (2) und der weiteren Auswerteeinheit (3) logisch miteinander verknüpft werden und generiert hieraus ein resultierendes Fehlersignal an ihrem Ausgang. Beispielhaft werden sowohl die Statusinformation der ersten Auswerteeinheit (2) als auch das resultierende Fehlersignal der Verknüpfungseinheit (4) an die Ausgänge der Gebersignal-Diagnosevorrichtung (1) weitergeleitet. Dabei gibt das resultierende Fehlersignal an, ob die Spursignale des Positionsänderungssensors (6) fehlerhaft sind.

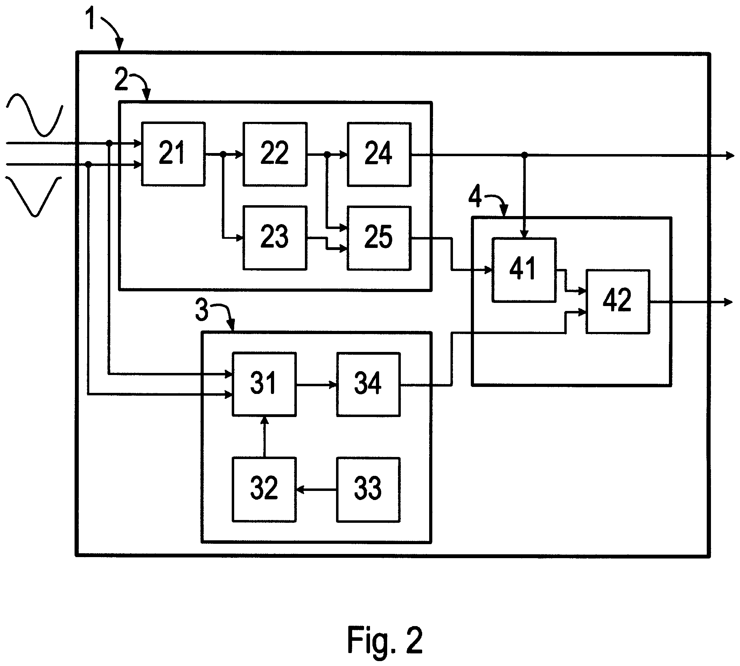

In Figur 2 ist eine beispielhafte Implementierung der ersten Auswerteeinheit (2), der weiteren Auswerteeinheit (3) und der Verknüpfungseinheit (4) dargestellt.

In der ersten Auswerteeinheit (2) werden die beiden Spursignale des Positionsänderungssensors (6) zunächst über die Schmitt-Trigger-Einheit (21) in Rechteck-Signale umgewandelt. Diese Rechteck-Signale werden sowohl einem Quadraturdecoder (22) als auch einem Flankenzähler (23) zur Verfügung gestellt. Ist das Rechteck-Signal der Signalspur A gegenüber dem Rechteck-Signal der Signalspur B zeitlich voreilend, so finden eine Bewegung in die eine Richtung statt. Ist die Signalspur A gegenüber der Signalspur B zeitlich nacheilend, findet eine Bewegung in die entgegengesetzte Richtung statt. Der Quadraturdecoder (22) detektiert diese Bewegungsrichtung und addiert bzw. subtrahiert in Abhängigkeit der erkannten aktuellen Bewegungsrichtung bei jeder Schaltflanke einen Zahlenwert, typischerweise eine 1, zu bzw. von einem ersten Zähler. Der Flankenzähler (23) addiert, unabhängig von der Bewegungsrichtung, bei jeder Schaltflanke des Rechteck-Signals der Spur A und/oder des Rechteck-Signals der Spur B einen Wert zu einem weiteren Zähler. Die Statusinformationsberechnungseinheit (24) berechnet aus dem bewegungsrichtungsabhängigen ersten Zähler des Quadraturdecoders (22) eine Statusinformation. Die Vergleichseinheit (25) vergleicht innerhalb eines Messzyklus $T_{CYCLE}$ den Betrag der Änderung des Zählerstands des Quadraturdecoders (22) mit der Änderung des Zählerstands des Flankenzählers (23). Bei Ungleichheit beider Änderungswerte wird ein Fehlersignal am Ausgang der Vergleichseinheit (25) erzeugt. Aufgrund der sich unterscheidenden Berechnungsverfahren bei Quadraturdecoder (22) und Flankenzähler (23) ergibt sich eine Ungleichheit der beiden Änderungswerte immer dann, wenn sich innerhalb eines Messzyklus $T_{CYCLE}$ die Bewegungsrichtung umkehrt und/oder ein Fehler bei der Spursignalerzeugung im Positionsänderungssensor (6) und/oder ein Fehler bei der Übertragung und/oder Verarbeitung der Spursignale aufgetreten sind. Um garantiert nur die Fehler und nicht die erlaubte Bewegungsrichtungsumkehr zu detektieren, wird das Fehlersignal der ersten Auswerteeinheit (2) nur ausgewertet, wenn die Statusinformation oberhalb einer gewissen Grenzfrequenz ($f_G$) liegt. Diese Grenzfrequenz garantiert auf Basis der Massenträgheit des Aktors, dessen Bewegung durch die Spursignale A und B abgebildet werden, dass innerhalb eines Messzyklus $T_{CYCLE}$ keine Bewegungsrichtungsänderung erfolgt sein kann.

In der weiteren Auswerteeinheit (3) werden die Spursignalpegel A und B über eine Analog/Digital-Wandler-Einheit (31) in zeitsynchrone Wertepaare ($U_A$, $U_B$) gewandelt. Die Messzeitpunkte der Analog/Digital-Wandlung werden über eine Zeitgeber-Einheit (32) vorgegeben, die in Abhängigkeit von Zahlenwerten aus einer Lookup-Table-Einheit (33) berechnet werden. Dabei bietet die Lookup-Table-Einheit (33) die Flexibilität, durch Speichern unterschiedlicher Messzeitpunkte, die weitere Auswerteeinheit (3) an die jeweiligen Bedürfnisse einer Applikation anzupassen. In der trigonometrischen Einheit (34) werden die zeitsynchronen Wertepaare ($U_A$, $U_B$) über den trigonometrischen Pythagoras mittels der Beziehung

$$U_A^2 + U_B^2 = (\widehat{U}_A * \sin(2\pi * f * t))^2 + (\widehat{U}_B * \cos(2\pi * f * t))^2 = R^2$$

ausgewertet. Verlässt der berechnete Wert $R^2$ einen vordefinierten, typischerweise konstanten, Bereich wird am Ausgang der trigonometrischen Einheit (34) ein Fehlersignal erzeugt, welches auch zum Ausgang der weiteren Auswerteeinheit (3) weitergeleitet wird. Dieser vordefinierte Bereich kann hierbei anwendungsspezifisch angepasst werden und wird typischerweise vom Hersteller des Positionsänderungssensors (6) angegeben. Die Verknüpfungseinheit (4) kombiniert das Fehlersignal der ersten Auswerteeinheit (2) und das Fehlersignal der weiteren Auswerteeinheit (3). Dabei wird das Fehlersignal der ersten Auswerteeinheit (2) über das Schaltelement (41) ausgeblendet, wenn die Statusinformation unterhalb der Grenzfrequenz $f_G$ liegt und somit nicht in jedem Fall ein gültiges Fehlersignal liefert (siehe weiter oben). Die Logikeinheit (42) setzt ein Fehlersignal am Ausgang, wenn entweder am Ausgang des Schaltelements (41) oder am Ausgang der weiteren

Auswerteeinheit (3) ein Fehlersignal anliegt. Somit wird unterhalb einer Grenzfrequenz ($f_G$) nur das Fehlersignal der weiteren Auswerteeinheit (3) und oberhalb der Grenzfrequenz $f_G$ die Fehlersignale sowohl der ersten Auswerteeinheit (2) als auch der weiteren Auswerteeinheit (3) für die Erzeugung eines resultierenden Fehlersignals verwendet.

**Wie in Figur 2 dargestellt, wird also einerseits das Ausgangssignal des Positionsänderungssensors (6) überwacht bezüglich Abweichung von einem zulässigen Wert der Summe der Quadrate der beiden Spursignale und andererseits auf Zählerfehler gemäß der beschriebenen Funktion der ersten Auswerteeinheit (2). Dabei wird die Überwachung auf Abweichung nur an den Zeitpunkten ausgeführt, welche gemäß Lookup-Table-Einheit (33) vorgegeben sind, so dass keine lückenfrei kontinuierliche Überwachung vorhanden ist. Da aber parallel zu dieser Überwachung auch die Überwachung auf Zählerfehler gemäß der beschriebenen Funktion**

der ersten Auswerteeinheit (2) ausgeführt wird, ist eine ausreichend hohe Sicherheit gewährleistbar. Insbesondere sind alle relevanten Fehlerarten abgedeckt.

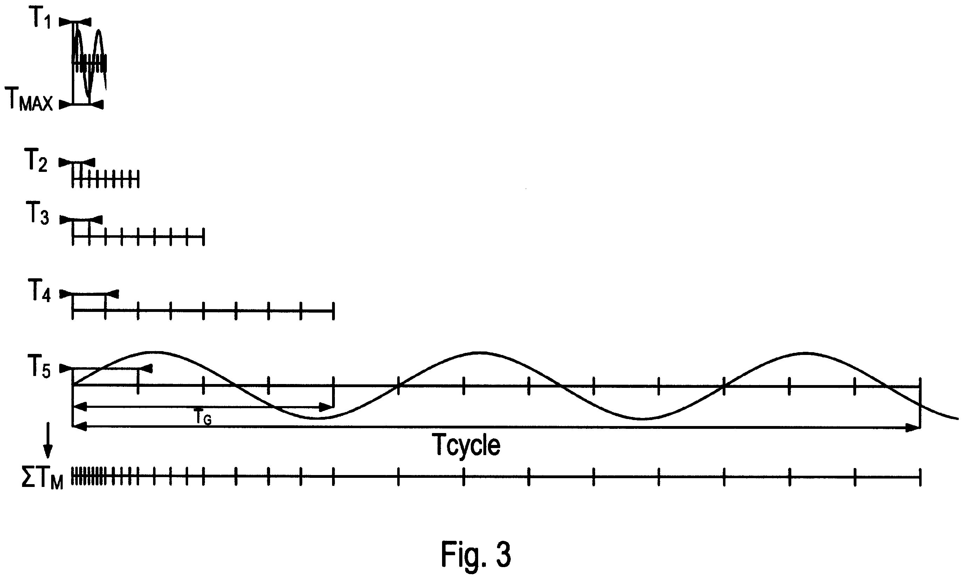

In Figur 3 ist die erfindungsgemäße Erzeugung der Messzeitpunkte dargestellt, die in der Lookup-Table-Einheit (33) der weitere Auswerteeinheit (3) abgelegt sind und die über die Zeitgeber-Einheit (32) zur zeitsynchronen Analog/Digital-Wandlung der Spursignale A und B durch die Analog/Digital-Wandler-Einheit (31) vorgesehen sind. Dabei wird das Messintervall $T_1$ so gewählt, dass ein Spursignal mit einer Grenzfrequenz $f_G$ so oft abgetastet wird, dass eine für die benötigte Diagnosedeckung ausreichende Anzahl N, typischerweise mit einer Anzahl von $N \geq 5$, an Messzeitpunkten innerhalb einer Spursignalperiode erreicht wird. Um eine kontinuierliche Abtastung zu erreichen, wird mit diesem Messintervall $T_1$ ein erster Messzeitpunktesatz über den gesamten Messzyklus $T_{CYCLE}$ generiert. Parallel wird ein zweiter Messzeitpunktesatz erzeugt, indem ein zweites Messintervall $T_2$ mit der halben Länge des Messintervalls $T_1$ gewählt wird und eine Anzahl K, typischerweise eine Anzahl von 9, Messzeitpunkte am Anfang des Messzyklus $T_{CYCLE}$ hinzugefügt werden. Jeder weitere Messzeitpunktesatz besteht wiederum aus einer Anzahl K von Messzeitpunkten, die am Anfang des Messzyklus $T_{CYCLE}$ hinzugefügt werden, wobei das Messintervall $T_N$ stets der halben Länge des vorhergehenden Messintervalls $T_{N-1}$ entspricht. Die Erzeugung weiterer Messzeitpunktesätze wird solange fortgesetzt bis mindestens eine Anzahl N von Messzeitpunkten innerhalb einer Spursignalperiode eines Spursignals mit Maximalfrequenz $f_{MAX}$ liegen. Die Anzahl K der Messzeitpunkte eines Messzeitpunktesatzes muss so gewählt werden, dass über den gesamten durch den jeweiligen Messzeitpunktesatz abzudeckenden Frequenzbereich das jeweilige Messintervall mindestens 75% bzw. mindestens 270° der Spursignalperiode beträgt. Der endgültige Satz von Messzeitpunkten $\Sigma T_M$ ergibt sich schließlich aus der Summe aller einzelnen Messzeitpunktesätze, wobei gleichzeitige Messzeitpunkte zu einem gemeinsamen Messzeitpunkt zusammengefasst werden.

Erfindungsgemäß wird also das analoge Ausgangssignal des Positionsänderungssensors (6) zyklisch gemäß einer Folge von Abtastzeitpunkten abgetastet. Die Folge ist endlich und ist auch als eindimensionales Muster bezeichenbar. Die Abtastzeitpunkte sind also gemäß diesem vorgegebenen Muster zeitlich nacheinander angeordnet.

Wie in Figur 3 wird das Muster zyklisch wiederholt angewendet. Dabei beträgt die zeitliche Länge des Musters $T_{CYCLE}$, so dass das Muster mit dieser Periodendauer wiederholt angewendet wird.

Das Muster ist aus mehreren direkt aufeinander folgenden Zeitabschnitten zusammengesetzt, in welchen jeweils mehrere Abtastzeitpunkte regelmäßig zeitlich beabstandet voneinander angeordnet sind. Allerdings ist die Beabstandung in jedem Zeitabschnitt anders, also unterschiedlich. Im ersten Zeitabschnitt ist eine sehr geringe Beabstandung ausgeführt, im zweiten Zeitabschnitt eine größere Beabstandung und so weiter. Jeder einem Zeitabschnitt nachfolgende Zeitabschnitt weist dabei eine größere Beabstandung auf.

In Figur 3 ist die Zusammensetzung des Musters als Summe von Grundmustern näher erläutert. Das erste Grundmuster weist eine regelmäßige Beabstandung der Abtastzeitpunkte mit dem Zeitabstand T1 auf. Die Beabstandung ist dabei so gewählt, dass bei der maximal zulässigen Frequenz, also der Frequenz $f_{MAX} = 1/T_{MAX}$, eine Periode des Ausgangssignals fünfmal abgetastet wird. Es gilt also $T_{MAX} = 5 * T_1$.

Ausgehend vom ersten Grundmuster werden weitere Grundmuster generiert. Dabei wird die Beabstandung eines nachfolgenden Grundmusters abhängig von der Beabstandung des jeweils vorhergehenden Grundmusters nach der Formel $T_N = 2 * T_{N-1}$ berechnet.

Die Anzahl der generierten Grundmuster ergibt sich aus einer technisch sinnvollen Reduzierung der Abtastzeitpunkte im Vergleich zur Abtastung mit höchst möglicher Frequenz.

Im vorliegenden Fall wurden 5 Grundmuster generiert.

Das erste Grundmuster mit der Beabstandung $T_1$ erstreckt sich über acht Perioden.

Das zweite Grundmuster weist eine größere Beabstandung auf, nämlich $T_2 = 2 * T_1$ und erstreckt sich über acht Perioden.

Das dritte Grundmuster weist eine größere Beabstandung auf, nämlich $T_3 = 2 * T_2$ und erstreckt sich über acht Perioden.

Das vierte Grundmuster weist eine größere Beabstandung auf, nämlich $T_4 = 2 * T_3$ und erstreckt sich über acht Perioden.

Das fünfte Grundmuster weist eine größere Beabstandung auf, nämlich $T_5 = 2 * T_4$ und erstreckt sich zeitlich über die Länge $T_{CYCLE}$.

Dabei ergibt sich eine untere Grenzfrequenz $f_G = 1/T_G$ mit $T_G = 5 * T_5$, dadurch gekennzeichnet, dass ein Ausgangssignal mit der Frequenz fc kontinuierlich fünfmal pro Periode abgetastet wird.

Die generierten Grundmuster werden summiert oder überlagert. Dabei werden gleichzeitige Abtastzeitpunkte von verschiedenen Grundmustern zu einem Abtastzeitpunkt in der Summe der Grundmuster zusammengefasst.

Die Summe oder Überlagerung der Grundmuster führt damit zu dem Muster, welches im ersten Zeitabschnitt acht regelmäßig mit $T_1$ zeitlich voneinander beabstandete Abtastzeitpunkte aufweist, im nachfolgenden Zeitabschnitt vier regelmäßig mit $T_2$ zeitlich voneinander beabstandete Abtastzeitpunkte aufweist, im darauf nachfolgenden Zeitabschnitt vier regelmäßig mit $T_3$ zeitlich voneinander beabstandete Abtastzeitpunkte aufweist, im darauf nachfolgenden Zeitabschnitt vier regelmäßig mit $T_4$ zeitlich voneinander beabstandete Abtastzeitpunkte aufweist und im darauf nachfolgenden Zeitabschnitt regelmäßig mit $T_5$ zeitlich voneinander beabstandete Abtastzeitpunkte aufweist.

Auf diese Weise ist gewährleistet, dass eine Periode des Ausgangssignals mindestens einmal pro $T_{CYCLE}$, mindestens fünffach abgetastet wird, solange dessen Frequenz im zulässigen Bereich zwischen $f_G$ und $f_{MAX}$ liegt. Die Perioden von Ausgangssignalen mit einer kleineren Frequenz als fc wird über mehrere $T_{CYCLE}$ immer mindestens fünffach abgetastet.

Vorteil ist dabei, dass Rechenzeit einsparbar ist, weil nicht über das ganze Intervall $T_{CYCLE}$ mit der höchst möglichen Frequenz abgetastet wird. Allerdings wäre eine lückenfreie kontinuierliche Überwachung, also auch Diagnose, nicht gewährleistbar, wenn das in Figur 3 dargestellte Abtasten angewendet wird. Diese Überwachungslücke wird aber durch die parallel ausgeführte digitale Überwachung reduziert.

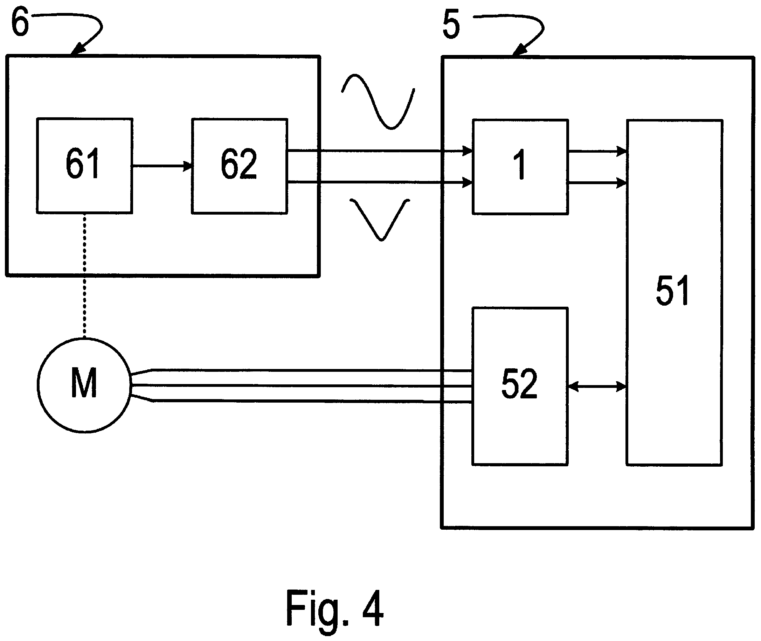

In Figur 4 ist eine erste beispielhafte Anwendung einer erfindungsgemäßen Gebersignal-Diagnosevorrichtung (1) gezeigt, die in einem Umrichter (5) eines elektrischen Leistungsantriebsystems integriert ist. Dabei ist der mit dem Umrichter (5) elektrisch leitend verbundene externe Positionsänderungssensor (6) typischerweise auf der Welle eines Elektromotors (M) montiert, wobei der Positionsänderungssensor (6) die Drehbewegung über eine mechanische Adaption (61) und mittels einer analogen Signalerfassung (62) in die Spursignale A und B umsetzt, die ihrerseits um 90° zueinander phasenverschoben sind und die Eingangsspursignale für die Gebersignal-Diagnosevorrichtung (1) darstellen. Die Ausgangssignale der Gebersignal-Diagnosevorrichtung (1) - die Statusinformation der ersten Auswerteeinheit (2) und das resultierende Fehlersignal der Verknüpfungseinheit (4) - werden dem Regelungsteil der Signalelektronik (51) des Umrichters (5) zur Verfügung gestellt. Der Regelungsteil (51) verwendet die Statusinformation zur Regelung und Steuerung des Elektromotors (M) und das resultierende Fehlersignal dient als Information darüber, ob die Statusinformation gültig ist und für die Regelung verwendet werden darf. Bei einer nicht gültigen Statusinformation wird die Ansteuerung des Elektromotors (M) unverzüglich unterbrochen, sodass keine gefahrbringende Bewegung, die zu einer Beschädigung der Anlage und/oder zu einem Personenschaden führen kann, entsteht. Nur mit einer gültigen Statusinformation ist es somit möglich, den Elektromotor (M) über die Leistungselektronik (52) applikationsspezifisch in Bewegung zu versetzen.

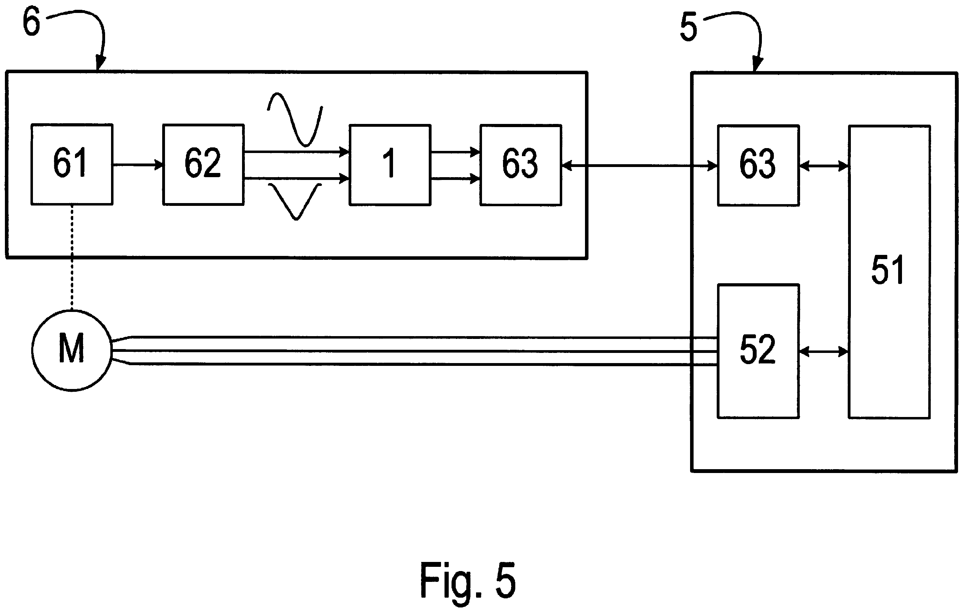

In Figur 5 ist eine zweite beispielhafte Anwendung einer erfindungsgemäßen Gebersignal-Diagnosevorrichtung (1) dargestellt, die in einem Positionsänderungssensor (6) integriert ausgeführt ist. Im Unterschied zu Figur 4 ist hier der Signaleingang der Gebersignal-Diagnosevorrichtung (1) direkt mit der analogen Signalerfassung (62) des Positionsänderungssensors (6) elektrisch leitend verbunden. Die Ausgangssignale der Gebersignal-Diagnosevorrichtung (1) werden über einen Umsetzer (63) auf das Protokoll einer seriellen Kommunikationsschnittstelle angepasst, wobei die serielle Kommunikationsschnittstelle sowohl mit dem Positionsänderungssensor (6) als auch mit dem Umrichter (5) verbunden ist. Über einen weiteren Umsetzer (63) im Umrichter (5) wird sowohl die Statusinformation als auch das resultierende Fehlersignal der Gebersignal-Diagnosevorrichtung (1) zyklisch dem Regelungsteil der Steuerelektronik (51) des Umrichters (5) digitalisiert zur Verfügung gestellt. Dadurch sind Fehler bei der Übertragung zwischen Positionsänderungssensor (6) und Umrichter (5) zusätzlich reduzierbar.

Die Erfindung bezieht sich also auf eine ressourcenoptimierte Fehlerdiagnose von Spursignalen eines Positionsänderungssensors. Erfindungsgemäß wird diese Aufgabe dadurch gelöst, dass die Diagnoseauswertung angepasst an eine maximal auftretende Spursignalfrequenz sowohl mittels digitaler Signalparameter als auch mittels analoger Signalparameter durchgeführt wird, wobei durch geeignete Kombination beider Signalparameterarten die Anzahl der benötigten Messzeitpunkte derart reduzierbar ist, dass damit Kosten, insbesondere Bauteil- und/oder Herstellungskosten, einsparbar sind.

Die folgende Bezugszeichenliste wird in die Beschreibung einbezogen und erläutert weitere Merkmale der Erfindung.

**Bezugszeichenliste:**

| | |
|---|---|
| 1 | Gebersignal-Diagnosevorrichtung |
| 2 | Erste Auswerteeinheit, digitale Signalparameterauswertung |
| 21 | Schmitt-Trigger-Einheit |
| 22 | Quadraturdecoder |
| 23 | Flankenzähler |
| 24 | Statusinformationsberechnungseinheit |
| 25 | Vergleichseinheit |
| 3 | Weitere Auswerteeinheit, analoge Signalparameterauswertung |

| 31 | Analog/Digital-Wandler-Einheit |
|---|---|
| 32 | Zeitgeber-Einheit |
| 33 | Lookup-Table-Einheit |
| 34 | Trigonometrische Einheit |
| 4 | Verknüpfungseinheit |
| 41 | Schaltelement |
| 42 | Logikeinheit |
| 5 | Umrichter |
| 51 | Regelungteil der Signalelektronik |
| 52 | Leistungselektronik zum Betreiben eines Elektromotors |
| 6 | Positionsänderungssensor |
| 61 | Mechanische Adaption |
| 62 | Analoge Signalerfassung |
| 63 | Umsetzer auf das Protokoll einer seriellen Kommunikationsschnittstelle |
| M | Elektromotor |
| f | Signalfrequenz |
| $f_G$ | Grenz-Signalfrequenz |
| $f_{MAX}$ | Maximale Signalfrequenz |
| t | Zeitpunkt |
| $T_1$ | Erstes Testintervall |
| $T_n$ | n-tes bzw. aktuelles Testintervall |
| $T_{n-1}$ | Vorhergehendes Testintervall |
| $\Sigma T_M$ | Summe der Messzeitpunkte |
| $T_{CYCLE}$ | Messzyklus |
| N | Anzahl benötigter Messzeitpunkte je Signalperiode für ausreichende Diagnosedeckung |
| K | Anzahl benötigter Messzeitpunkte für einen Messzeitpunktesatz |
| $U_A$ | Signalpegel des Spursignals A |
| $U_B$ | Signalpegel des zum Spursignal A um 90° phasenverschobenes Spursignals B |
| $\hat{U}_A$ | Amplitude des Spursignals A |
| $\hat{U}_B$ | Amplitude des Spursignals B |

**Patentansprüche**

1. Vorrichtung zur Fehlerdiagnose von Spursignalen eines Positionsänderungssensors (6), aufweisend

   - eine **erste Auswerteeinheit** (2),
   - eine **weitere Auswerteeinheit** (3),
   - und **eine Verknüpfungseinheit** (4),

   wobei die **erste Auswerteeinheit** (2) **dazu eingerichtet ist**, die Spursignale auf Basis digitaler Signalparameter, **auszuwerten**,

   wobei die erste Auswerteeinheit derart **dazu eingerichtet ist,** aus den digitalen Signalparametern mindestens eine Statusinformation, **zu berechnen** und an einem ersten Ausgang der ersten Auswerteeinheit (2) **bereitzustellen,**
   wobei die erste Auswerteeinheit derart **dazu eingerichtet ist,** bei Erkennen eines Fehlerzustands der digitalen Signalparameter ein Fehlersignal an einem weiteren Ausgang der ersten Auswerteeinheit (2) **zu erzeugen,**
   **wobei die weitere Auswerteeinheit derart dazu eingerichtet ist, ein Fehlersignal am Ausgang der weiteren Auswerteeinheit zu erzeugen**
   **dadurch gekennzeichnet, dass**
   die **weitere Auswerteeinheit** (3) derart **dazu eingerichtet ist,** die Spursignale auf Basis analoger Signalparameter **auszuwerten**
   **und das von der weiteren Auswerteeinheit (3) erzeugte Fehlersignal am Ausgang der weiteren Auswerteeinheit (3) beim Verlassen eines Gültigkeitsbereichs der analogen Signalparameter zu erzeugen,**
   wobei die **Verknüpfungseinheit** (4) derart **dazu eingerichtet ist,** in Abhängigkeit von der berechneten Statusinformation, dem Zustand des Fehlersignals der ersten Auswerteeinheit (2) und dem Zustand des Fehlersignals der weiteren Auswerteeinheit (3) durch logische Verknüpfung ein resultierendes Fehlersignal am Ausgang der Verknüpfungseinheit (4) **zu generieren**
**und** mindestens das resultierende Fehlersignal der Verknüpfungseinheit (4) an einen ersten Ausgang der Vorrichtung **weiterzuleiten.**

2. Vorrichtung nach Anspruch 1,
**dadurch gekennzeichnet, dass**
die Vorrichtung **als Gebersignal-Diagnosevorrichtung (1) ausgeführt und dazu eingerichtet ist**, die Statusinformation der ersten Auswerteeinheit (2) an einen weiteren Ausgang der Gebersignal-Diagnosevorrichtung (1) **weiterzuleiten**.

3. Vorrichtung nach mindestens einem der vorangegangenen Ansprüche,
**dadurch gekennzeichnet, dass**
die **erste Auswerteeinheit** (2)

   - eine **Schmitt-Trigger-Einheit (21)**,
   - einen **Quadraturdecoder (22)**,
   - einen **Flankenzähler (23)**,
   - eine **Statusinformationsberechnungseinheit (24)**,
   - und eine **Vergleichseinheit (25)** aufweist,

wobei die **Schmitt-Trigger-Einheit (21) dazu eingerichtet ist,** die Spursignale des Positionsänderungssensors (6) in Rechteck-Signale **umzuwandeln,**

   wobei der **Quadraturdecoder (22) dazu eingerichtet ist,** aus den Rechteck-Signalen einen richtungsabhängigen Flankenzählwert **zu generieren,**
   wobei der **Flankenzähler** (23) **dazu eingerichtet ist,** aus den Rechteck-Signalen einen richtungsunabhängigen Flankenzählwert **zu generieren,**
   wobei die **Statusinformationsberechnungseinheit** (24) **dazu eingerichtet ist,** aus dem richtungsabhängigen Flankenzählwert eine Statusinformation **zu berechnen** und an einem ersten Ausgang der ersten Auswerteeinheit (2) zur Verfügung **zu stellen,**
   und wobei die **Vergleichseinheit (25) dazu eingerichtet ist,** innerhalb eines Messzyklus $T_{CYCLE}$ den Betrag der Änderung des richtungsabhängigen Flankenzählwerts und die Änderung des richtungsunabhängigen Flankenzählwerts auf Gleichheit **zu überprüfen** und bei Ungleichheit ein Fehlersignal an einem weiteren Ausgang der ersten Auswerteeinheit (2) **zu setzen.**

4. Vorrichtung nach mindestens einem der vorangegangenen Ansprüche,
**dadurch gekennzeichnet, dass**
die **weitere Auswerteeinheit** (3) aus

   - einer **Zeitgeber-Einheit (32)**,
   - einer **Lookup-Table-Einheit (33)**,
   - einer **Analog/Digital-Wandler-Einheit (31)**,
   - und einer **Trigonometrischen Einheit (34)** besteht,

wobei die **Zeitgeber-Einheit (32) dazu eingerichtet ist,** zyklisch in variablen Abständen abhängig von den Daten aus einer **Lookup-Table-Einheit** (33) Synchronisationssignale **zu generieren,**

   wobei die **Analog/Digital-Wandler-Einheit** (31) **dazu eingerichtet ist,** abhängig von diesem Synchronisationssignal die aktuellen Analogpegel der Spursignale des Positionsänderungssensors (6) in äquivalente digitale Wertepaare ($U_A$, $U_B$) **umzuwandeln,**
   und wobei die **Trigonometrische Einheit** (34) **dazu eingerichtet ist,** die digitalen Wertepaare ($U_A$, $U_B$) der Spursignale über die Beziehung:

$$U_A^2 + U_B^2 = (\hat{U}_A * \sin(2\pi * f * t))^2 + (\hat{U}_B * \cos(2\pi * f * t))^2 = R^2$$

auf Gültigkeit **zu prüfen** und bei Verlassen eines definierten Toleranzwertebereichs ein Fehlersignal am Ausgang der weiteren Auswerteeinheit (3) zu setzen.

**5.** Vorrichtung nach mindestens einem der vorangegangenen Ansprüche,
**dadurch gekennzeichnet, dass**

die **Verknüpfungseinheit** (4) aus
einem **Schaltelement** (41)
und einer **Logikeinheit** (42) besteht,
wobei das **Schaltelement** (41) **dazu eingerichtet ist,** abhängig von der Statusinformation der ersten Auswerteeinheit (2) das Fehlersignal der **ersten Auswerteeinheit** (2) an seinem Ausgang **weiterzuleiten bzw. nicht weiterzuleiten,**
und wobei die **Logikeinheit** (42) **dazu eingerichtet ist,** ein Fehlersignal am Ausgang der Verknüpfungseinheit (4) **zu setzen,** sobald das durch das Schaltelement (41) weitergeleitete Fehlersignal der **ersten Auswerteeinheit** (2) und/oder das Fehlersignal der **weiteren Auswerteeinheit** (3) anliegt.

**6.** Vorrichtung nach mindestens einem der vorangegangenen Ansprüche wobei die Vorrichtung einen Umrichter (5) und einen Positionsänderungssensor (6) aufweist, **dadurch gekennzeichnet, dass**

die Auswerteeinheiten und die Verknüpfungseinheit in einem Umrichter (5) integriert sind,
wobei der Positionsänderungssensor (6) mit analoger Ausgangsstufe (62) ausgeführt ist,
und wobei die erste Auswerteeinheit ausgangsseitig mit dem Regelungsteil der Signalelektronik (51) des Umrichters (5) verbunden ist.

**7.** Vorrichtung nach **Anspruch 6,**
**dadurch gekennzeichnet, dass**

die Auswerteeinheiten und die Verknüpfungseinheit direkt in dem Positionsänderungssensor (6) integriert sind,
wobei die Auswerteeinheiten eingangsseitig mit der analogen Ausgangsstufe (62) des Positionsänderungssensors (6) verbindbar ist, in der die analogen Spursignale erzeugt und/oder konditioniert werden,
wobei die erste Auswerteeinheit und/oder die Verknüpfungseinheit ausgangsseitig mit einem Umsetzer (63) auf eine serielle Kommunikationsschnittstelle verbindbar ist,
wobei der Positionsänderungssensor (6) über eine serielle Kommunikationsschnittstelle mit einem Umrichter (5) verbindbar ist,
und wobei über diese serielle Kommunikationsschnittstelle mindestens die Spursignale und/oder die Statusinformation des Ausgangs der ersten Auswerteeinheit (2) und das resultierende Fehlersignal des Ausgangs der Verknüpfungseinheit (4) mittels eines weiteren Umsetzers (63) an den Regelungsteil der Signalelektronik (51) des Umrichters (5) übertragbar sind.

**8.** Verfahren zum Überwachen der Spursignale eines Positionsänderungssensors (6) mittels **einer als Gebersignal-Diagnosevorrichtung (1) ausgeführten Vorrichtung nach mindestens einem der vorangegangenen Ansprüche,**

**wobei** die Spursignale des Positionsänderungssensors (6) **zyklisch mit einer zeitlichen Folge von Abtastzeitpunkten abgetastet und die so bestimmten Abtastwerte ausgewertet werden,**
**wobei die Folge aus Zeitabschnitten zusammengesetzt ist,**
**wobei jeder Zeitabschnitt jeweils mehr als vier zeitlich regelmäßig voneinander beabstandete Abtastzeitpunkte aufweist und dabei jedem Zeitabschnitt eine jeweilige zeitliche Beabstandung** ($T_1$, $T_2$, $T_3$, $T_4$, $T_5$) **zugeordnet ist,** wobei **jedem der Zeitabschnitte eine jeweilige Beabstandung eineindeutig zugeordnet ist,**
**wobei die Folge vorab bei Herstellung oder Inbetriebnahme erzeugt wird und in einer Lookup-Table-Einheit (33) abgelegt wird.**

**9.** Verfahren nach Anspruch 8,
**dadurch gekennzeichnet, dass**
**die einem der Zeitabschnitte zugeordnete zeitliche Beabstandung kleiner ist als die einem anderen, innerhalb der Folge später angeordneten, Zeitabschnitte zugeordnete zeitliche Beabstandung.**

**10.** Verfahren nach Anspruch 9,
**dadurch gekennzeichnet, dass**
**die einem vorausgehenden Zeitabschnitt der Folge direkt nachfolgenden Zeitabschnitt der Folge zugeord-**

**nete zeitliche Beabstandung doppelt so groß ist wie die dem vorausgehenden Zeitabschnitt zugeordnete zeitliche Beabstandung.**

**11.** Verfahren nach Anspruch 8, 10 oder 9,
**dadurch gekennzeichnet, dass**

> **die einem, Zeitabschnitt der Folge zugeordnete Beabstandung einem Fünftel der Periodenlänge der maximal zulässigen Frequenz der Ausgangssignale des Positionsänderungssensors, und/oder dass**
> **die einem, Zeitabschnitt der Folge zugeordnete Beabstandung einem Fünftel der Periodenlänge einer Grenz-Signalfrequenz $f_G$ oder weniger entspricht.**

**12.** Verfahren nach Anspruch 8, 11, 10 oder 9,
**dadurch gekennzeichnet, dass**
**die Spursignale auch auf Basis digitaler Signalparameter, ausgewertet werden und das Ergebnis dieser Auswertung verknüpft wird mit dem Auswerten der Abtastwerte,**

## Claims

**1.** Device for diagnosing errors in track signals of a position-change sensor (6), comprising

> - a first evaluation unit (2),
> - a further evaluation unit (3)
> - and a gate unit (4),

the first evaluation unit (2) being configured to evaluate the track signals on the basis of digital signal parameters,

> the first evaluation unit being configured such as to calculate at least one piece of status information from the digital signal parameters and to make it available at a first output of the first evaluation unit (2),
> the first evaluation unit being configured such as to generate an error signal at a further output of the first evaluation unit (2) when an error status of the digital signal parameters is detected,
> the further evaluation unit being configured such as to generate an error signal at the output of the further evaluation unit,
> **characterised in that**
> the further evaluation unit (3) is configured such as to evaluate the track signals on the basis of analogue signal parameters
> and to generate, at the output of the further evaluation unit (3), the error signal generated by the further evaluation unit (3) when the analogue signal parameters leave a validity range, the gate unit (4) being configured such as to generate, by means of logical gating, a resultant error signal at the output of the gate unit (4) depending on the calculated status information, the status of the error signal of the first evaluation unit (2) and the status of the error signal of the further evaluation unit (3)
> and to forward at least the resultant error signal of the gate unit (4) to a first output of the device.

**2.** Device according to claim 1,
**characterised in that**
the device is in the form of a sensor-signal diagnosis device (1) and is configured to forward the status information of the first evaluation unit (2) to a further output of the sensor-signal diagnosis device (1).

**3.** Device according to at least one of the preceding claims,
**characterised in that**
the first evaluation unit (2) comprises

> - a Schmitt trigger unit (21),
> - a quadrature decoder (22),
> - an edge counter (23),
> - a status-information calculation unit (24)
> - and a comparison unit (25),

the Schmitt trigger unit (21) being configured to convert the track signals of the position-change sensor (6) into square-wave signals,

the quadrature decoder (22) being configured to generate a direction-dependent edge count from the square-wave signals,
the edge counter (23) being configured to generate a direction-independent edge count from the square-wave signals,
the status-information calculation unit (24) being configured to calculate a piece of status information from the direction-dependent edge count and to make it available at a first output of the first evaluation unit (2),
and the comparison unit (25) being configured to check, within a measurement cycle $T_{CYCLE}$, the equality of the magnitude of the change in the direction-dependent edge count and the change in the direction-independent edge count, and to give an error signal at a further output of the first evaluation unit (2) if they are not equal.

4. Device according to at least one of the preceding claims,
**characterised in that**
the further evaluation unit (3) consists of

- a timer unit (32),
- a lookup table unit (33),
- an analogue/digital converter unit (31)
- and a trigonometric unit (34),

the timer unit (32) being configured to generate synchronisation signals cyclically at variable intervals depending on the data from a lookup table unit (33),

the analogue/digital converter unit (31) being configured to convert the current analogue level of the track signals of the position-change sensor (6) into equivalent digital value pairs ($U_A$, $U_B$) depending on said synchronisation signal,
and the trigonometric unit (34) being configured to check the validity of the digital value pairs ($U_A$, $U_B$) of the track signals using the equation:

$$U_A^2 + U_B^2 = (\widehat{U}_A * \sin(2\pi * f * t))^2 + (\widehat{U}_B * \cos(2\pi * f * t))^2 = R^2$$

and to give an error signal at the output of the further evaluation unit (3) if they leave a defined tolerance value range.

5. Device according to at least one of the preceding claims,
**characterised in that**

the gate unit (4) consists of
a switch element (41)
and a logic unit (42),
the switch element (41) being configured to forward, or not forward, the error signal of the first evaluation unit (2) at the output thereof depending on the status information of the first evaluation unit (2),
and the logic unit (42) being configured to give an error signal at the output of the gate unit (4) as soon as the error signal of the first evaluation unit (2) forwarded by the switch element (41) and/or the error signal of the further evaluation unit (3) is/are applied.

6. Device according to at least one of the preceding claims,

the device comprising a frequency changer (5) and a position-change sensor (6), **characterised in that**
the evaluation units and the gate unit are integrated in a frequency changer (5),
the position-change sensor (6) being configured to have an analogue output stage (62), and the first evaluation unit being connected, at its output, to the control component of the signal electronics (51) of the frequency changer (5).

7. Device according to claim 6,

**characterised in that**

the evaluation units and the gate unit are integrated directly in the position-change sensor (6),
the evaluation units being connectable, at their inputs, to the analogue output stage (62) of the position-change sensor (6), in which output stage the analogue track signals are generated and/or conditioned,
the first evaluation unit and/or the gate unit being connectable, at their outputs, to a converter (63) for a serial communications interface,
the position-change sensor (6) being connectable to a frequency changer (5) by means of a serial communications interface,
and at least the track signals and/or the status information of the output of the first evaluation unit (2) and the resultant error signal of the output of the gate unit (4) being transmittable, by means of said serial communications interface, to the control component of the signal electronics (51) of the frequency changer (5) by means of a further converter (63).

8. Method for monitoring the track signals of a position-change sensor (6) by means of a device according to at least one of the preceding claims in the form of a sensor-signal diagnosis device (1),

wherein the track signals of the position-change sensor (6) are scanned cyclically in a time sequence of scanning times, and the scan values thus determined are evaluated,
wherein the sequence is made up of time periods,
wherein each time period in each case has more than four scanning times that are separated from one another regularly in terms of time, and in the process each time period is assigned a respective time spacing ($T_1$, $T_2$, $T_3$, $T_4$, $T_5$), wherein each of the time periods is bijectively assigned a respective spacing,
wherein the sequence is generated in advance during manufacture or commissioning and stored in a lookup table unit (33).

9. Method according to claim 8,
**characterised in that**
the time spacing assigned to one of the time periods is smaller than the time spacing assigned to another time period arranged later in the sequence.

10. Method according to claim 9,
**characterised in that**
the time spacing assigned to a time period of the sequence that directly follows a preceding time period of the sequence is double that of the time spacing assigned to the preceding time period.

11. Method according to claim 8, claim 10 or claim 9,
**characterised in that**

the spacing assigned to a time period of the sequence corresponds to one fifth of the period length of the maximum permitted frequency of the output signals of the position-change sensor
and/or **in that**
the spacing assigned to a time period of the sequence corresponds to one fifth or less of the period length of a threshold signal frequency $f_G$.

12. Method according to claim 8, claim 11, claim 10 or claim 9,
**characterised in that**
the track signals are also evaluated on the basis of digital signal parameters and the result of this evaluation is gated to the evaluation of the scan values.

**Revendications**

1. Dispositif de diagnostic de défauts de signaux de voie d'un capteur de changement de position (6), comportant

- une première unité d'évaluation (2),
- une autre unité d'évaluation (3),
- et une unité de combinaison (4),

dans lequel la première unité d'évaluation (2) est conçue pour évaluer les signaux de voie sur la base de paramètres de signaux numériques,

dans lequel la première unité d'évaluation est conçue pour calculer au moins une information d'état à partir des paramètres de signaux numériques et la mettre à disposition sur une première sortie de la première unité d'évaluation (2),

dans lequel la première unité d'évaluation est conçue pour générer un signal d'erreur sur une autre sortie de la première unité d'évaluation (2) lorsqu'un état d'erreur des paramètres de signaux numériques est détecté, dans lequel l'autre unité d'évaluation est conçue pour générer un signal d'erreur sur la sortie de l'autre unité d'évaluation,

**caractérisé en ce que**

l'autre unité d'évaluation (3) est conçue pour évaluer les signaux de voie sur la base de paramètres de signaux analogiques

et pour générer le signal d'erreur généré par l'autre unité d'évaluation (3) sur la sortie de l'autre unité d'évaluation (3) lorsque les paramètres de signaux analogiques se situent en dehors d'une plage de validité, dans lequel l'unité de combinaison (4) est conçue pour générer un signal d'erreur résultant sur la sortie de l'unité logique (4) par une combinaison logique, en fonction de l'information d'état calculée, de l'état du signal d'erreur de la première unité d'évaluation (2) et de l'état du signal d'erreur de l'autre unité d'évaluation (3)

et pour transmettre au moins le signal d'erreur résultant de l'unité de combinaison (4) sur une première sortie du dispositif.

2. Dispositif selon la revendication 1,
**caractérisé en ce que**
le dispositif est réalisé sous la forme d'un dispositif de diagnostic de signal de codeur (1) et est conçu pour transmettre l'information d'état de la première unité d'évaluation (2) sur une autre sortie du dispositif de diagnostic de signal de codeur (1).

3. Dispositif selon au moins l'une des revendications précédentes,
**caractérisé en ce que**
la première unité d'évaluation (2) comporte

- une unité à trigger de Schmitt (21),
- un décodeur en quadrature (22),
- un compteur de fronts (23),
- une unité de calcul d'information d'état (24),
- et une unité de comparaison (25),

dans lequel l'unité à trigger de Schmitt (21) est conçue pour convertir les signaux de voie du capteur de changement de position (6) en signaux rectangulaires, dans lequel le décodeur en quadrature (22) est conçu pour générer une valeur de comptage de fronts dépendant de la direction à partir des signaux rectangulaires,

dans lequel le compteur de fronts (23) est conçu pour générer une valeur de comptage de fronts ne dépendant pas de la direction à partir des signaux rectangulaires, dans lequel l'unité de calcul d'information d'état (24) est conçue pour calculer une information d'état à partir de la valeur de comptage de fronts dépendant de la direction et pour les mettre à disposition sur une première sortie de la première unité d'évaluation (2), et dans lequel l'unité de comparaison (25) est conçue pour vérifier l'égalité entre le niveau de la variation de la valeur de comptage de fronts dépendant de la direction et la variation de la valeur de comptage de fronts ne dépendant pas de la direction au cours d'un cycle de mesure $T_{CYCLE}$ et pour régler un signal d'erreur sur une autre sortie de la première unité d'évaluation (2) en cas d'inégalité.

4. Dispositif selon au moins l'une des revendications précédentes,
**caractérisé en ce que**
l'autre unité d'évaluation (3) se compose

- d'une unité de temporisation (32)
- d'une unité de table de consultation (33),
- d'une unité de conversion analogique/numérique (31),
- et d'une unité trigonométrique (34),

dans lequel l'unité de temporisation (32) est conçue pour générer de manière cyclique des signaux de synchronisation à des intervalles variables en fonction des données provenant d'une unité de table de consultation (33),

dans lequel l'unité de conversion analogique/numérique (31) est conçue pour convertir les niveaux analogiques actuels des signaux de voie du capteur de changement de position (6) en des paires de valeurs numériques équivalentes ($U_A$, $U_B$) en fonction dudit signal de synchronisation,
et dans lequel l'unité trigonométrique (34) est conçue pour vérifier la validité des paires de valeurs numériques ($U_A$, $U_B$) des signaux de voie par l'intermédiaire de la relation :

$$U_A^2 + U_B^2 = \left( \widehat{U}_A * \sin(2\pi * f * t) \right)^2 + \left( \widehat{U}_B * \cos(2\pi * f * t) \right)^2 = R^2$$

et pour régler un signal d'erreur à la sortie de l'autre unité d'évaluation (3) lorsqu'une plage de valeurs de tolérance définie est dépassée.

5. Dispositif selon au moins l'une des revendications précédentes,
**caractérisé en ce que**

l'unité de combinaison (4) se compose
d'un élément de commutation (41) et
d'une unité logique (42),
dans lequel l'élément de commutation (41) est conçu pour transmettre ou ne pas transmettre sur sa sortie le signal d'erreur de la première unité d'évaluation (2) en fonction de l'information d'état de la première unité d'évaluation (2), et
dans lequel l'unité logique (42) est conçue pour régler un signal d'erreur sur la sortie de l'unité de combinaison (4) dès que le signal d'erreur de la première unité d'évaluation (2) transmis par l'élément de commutation (41) et/ou le signal d'erreur de l'autre unité d'évaluation (3) est présent.

6. Dispositif selon au moins l'une des revendications précédentes,

dans lequel le dispositif comporte un convertisseur (5) et un capteur de changement de position (6), **caractérisé en ce que**
les unités d'évaluation et l'unité de combinaison sont intégrées dans un onduleur (5),
dans lequel le capteur de changement de position (6) est réalisé de manière à comporter un étage de sortie analogique (62),
et dans lequel la première unité d'évaluation est reliée, côté sortie, à la section de régulation de l'électronique de signaux (51) de l'onduleur (5).

7. Dispositif selon la revendication 6,
**caractérisé en ce que**

les unités d'évaluation et l'unité de combinaison sont directement intégrées dans le capteur de changement de position (6),
dans lequel les unités d'évaluation peuvent être reliées, côté entrée, à l'étage de sortie analogique (62) du capteur de changement de position (6) dans lequel les signaux de voie analogiques sont générés et/ou conditionnés,
dans lequel la première unité d'évaluation et/ou l'unité de combinaison peuvent être reliées côté sortie à un convertisseur (63) sur une interface de communication série,
dans lequel le capteur de changement de position (6) peut être relié à un onduleur (5) par l'intermédiaire d'une interface de communication série,
et dans lequel au moins les signaux de voie et/ou l'information d'état de la sortie de la première unité d'évaluation (2) et le signal d'erreur résultant de la sortie de l'unité de combinaison (4) peuvent être transmis par l'intermédiaire de ladite interface de communication série au moyen d'un autre convertisseur (63) à la section de régulation de l'électronique de signaux (51) de l'onduleur (5).

8. Procédé de surveillance des signaux de voie d'un capteur de changement de position (6) au moyen d'un dispositif réalisé sous la forme d'un dispositif de diagnostic de signal de capteur (1) selon au moins l'une des revendications précédentes,

dans lequel les signaux de voie du capteur de changement de position (6) sont échantillonnés de manière cyclique selon une séquence temporelle d'instants d'échantillonnage et les valeurs échantillonnées ainsi déterminées sont évaluées,

dans lequel la séquence se compose de sections temporelles,

dans lequel chaque section temporelle comporte plus de quatre instants d'échantillonnage régulièrement espacés les uns des autres dans le temps, et un espacement temporel respectif ($T_1$, $T_2$, $T_3$, T4, $T_5$) étant ainsi associé à chaque section temporelle, dans lequel un espacement respectif est associé de manière unique à chacune des sections temporelles,

dans lequel la séquence est générée à l'avance pendant la fabrication ou la mise en service et est stockée dans une unité de table de consultation (33).

9. Procédé selon la revendication 8,
   **caractérisé en ce que**
   l'espacement temporel associé à l'une des sections temporelles est plus petit que l'espacement temporel associé à une autre section temporelle disposée plus loin dans la séquence.

10. Procédé selon la revendication 9,
    **caractérisé en ce que**
    l'espacement temporel associé à une section temporelle précédente de la séquence qui suit immédiatement la section temporelle de la séquence est deux fois plus grand que l'espacement temporel associé à la section temporelle précédente.

11. Procédé selon la revendication 8, 10 ou 9, **caractérisé en ce que**

    l'espacement associé à une section temporelle de la séquence est égal à un cinquième de la longueur de période de la fréquence maximale admissible des signaux de sortie du capteur de changement de position, et/ou **en ce que**
    l'espacement associé à une section temporelle de la séquence correspond à un cinquième de la longueur de période d'une fréquence de signal limite $f_G$ ou moins.

12. Procédé selon la revendication 8, 11, 10 ou 9, **caractérisé en ce que**
    les signaux de voie sont évalués, également sur la base de paramètres de signaux numériques, et le résultat de ladite évaluation est combiné à l'évaluation des valeurs d'échantillonnage.

Fig. 1

EP 3 577 422 B1

Fig. 2

$T_1$

$T_{MAX}$

$T_2$

$T_3$

$T_4$

$T_5$

$\Sigma T_M$

$T_G$

Tcycle

Fig. 3

Fig. 4

EP 3 577 422 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007033009 A1
- DE 3631429 A1
- DE 102011083042 A1
- WO 2006092026 A1
- EP 1302753 A1
- DE 102010051873 A1
- WO 03007099 A1
- EP 0432401 A2
- DE 10036090 A1
- DE 10208915 A1